# EUROPEAN PATENT APPLICATION

(11) **EP 2 519 016 A2**
(43) Date of publication of application: **31.10.2012**
(21) Application number: 12164176.5
(22) Date of filing: 13.04.2012
(51) Int. Cl.: H04N 21/25

(54) **Collaborative decision-making for deriving micro-recommendations for offsite users**

(30) Priority: 30.04.2011 US 201161481153 P; 23.09.2011 US 201113243380
(71) Applicant: Samsung Electronics Co., Ltd., Suwon-si, Gyeonggi-do, 443-742 (KR)
(72) Inventor: Tran, Dang Van, Laguna Niguel, CA California 92677 (US); Zheng, Xing, Irvine, CA California 92604 (US); Khoshgozaran, Jaffar, Pasadena, CA California 91106 (US); Zhu, Yingnan, Irvine, CA California 92612 (US)
(74) Representative: Clark, David James

(57) **Abstract**

An offsite user having an offsite device can collaborate with an onsite user having an onsite device. In many cases, the offsite device may be a handheld device, such as a smartphone and the onsite device may be a TV and is generally stationary. The onsite device receives a context from the offsite device wherein the offsite user is asking the onsite user for help with information or making a decision. The offsite device may not have the full range of services and other data that the onsite device has and would like to collaborate with the onsite device/user in making a decision. The onsite device receives the content, which may have certain physical and user-generated characteristics, and obtains recommendations from appropriate Web services. The onsite user may have the option of viewing these recommendations and can then send a reply message back to the offsite user telling her what she may do, thereby providing the offsite user with a more informed decision by virtue of collaborating with the onsite user.

## Description

### TECHNICAL FIELD

The present invention relates generally to mobile and stationary device and software. More specifically, it relates to communication between devices over a network and executing apps to enable collaborative decision-making over the network.

### BACKGROUND OF THE INVENTION

There are currently a growing number of services available to mobile device users that are useful in helping a device user in making a decision. Users are becoming increasingly accustomed to using their smart phones, tablets, mobile GPS devices, car navigation systems, and other such devices to provide them with information relating to a specific user goal or decision. This goal may take on various forms. A few examples include looking up services based on the user's location, obtaining directions (for driving or walking); getting pricing information on an item or service (price-comparison); getting information on nearby restaurants, shops, tourist spots; getting movie times; getting contact information for a business, getting traffic information, and the list goes on. The number of such examples will likely grow over time as more services become available and devices become more sophisticated. Sometimes a goal may be a combination of these objectives (e.g., ordering food from a restaurant and getting directions and ETA to the restaurant and then to the user's home given current traffic conditions).

One common thread in the examples above is that the user is outdoors, if not literally, at least in the sense that the user is offsite or, in other words, not at his or her home. The decisions made by the (offsite) user are based solely on that user's actions and locations. Some of the examples listed above use location-based services ("LBS") where the offsite user looks up services surrounding the user based on the user's current handheld GPS coordinates (or possible routes/waypoints). In these cases, the user is making a decision based only on the LBS service and typically nothing else. In another example, with price-comparison services, the offsite user queries for the best price on a particular product he or she just scanned. Here, the user is also in the process of making a decision based only on the user's own actions and only on information that is available to that specific user; it takes into consideration the context and environmental factors only of the offsite user. These scenarios focus on a decision-making process that involves a sole actor and lacks any symmetry, collaboration, or leveraging with other actors. In many situations, they deal only with location-filtered media search. They do not take into consideration contexts, environmental factors, software and hardware resources, and information available to other individuals who are in a position to collaborate with the offsite user.

### SUMMARY OF THE INVENTION

General aspects of the invention include, but are not limited to methods, systems, apparatus, and computer-readable media for generating micro-recommendations and enabling collaborative decision-making between two or more users generally for the benefit of one of the users, referred to as the offsite user.

In one aspect of the present invention, a method of collaborative decision-making using contexts of an offsite device and an onsite device in a peer-to-peer network is described. In one embodiment, an offsite context from an offsite device, such as a handheld mobile device, is sent to at an onsite device, such as a TV or a computer. In another embodiment, an onsite context may be sent to an offsite device. The offsite context is parsed and analyzed. In another embodiment, it may first be combined with an onsite context before being analyzed. The onsite context is retrieved from a context database or repository on the onsite device. Micro-apps, i.e., services, are determined based on the combined context. These services are presented to onsite user on a screen, such as on a TV. The TV viewer selects a service from the presentation. The system detects the selection and launches the service(s) using means known in the art. Typically, an online service, such as a Web search engine or other online application is executed. Upon execution of the service, the onsite device receives a response. In one embodiment, the structure of the response may be pre-defined and pre-populated based on the combined context and decisions made by the services. The response is then transmitted to the offsite device over the Internet or over a cellular data network. In one embodiment, the onsite device does not perform any processing on the response it receives from the service; it merely acts as a conduit to the offsite device. In another embodiment, the combined context may be sent to the offsite (or to the onsite) device where the combined context may be used to make decisions.

In another embodiment, a method of collaborative decision-making using online and offline contexts are described. An offsite context is received at the onsite device. The context is then parsed so that information can be extracted. The extracted information of the offsite context is then sent to a service (or services). The service may then query the onsite device of the onsite context (i.e., the onsite device receives queries from the service) or receive the onsite context from users' inputs at the onsite device. The service, having data on both contexts, may then contact Web services to obtain decisions or recommendations. Previews of these decisions or recommendations from the service(s) are then presented to the onsite device viewer. The viewer selects a service based on the preview of recommendations of the one or more qualified services. The selected service is then launched. The onsite device receives a reply message from the selected service. The reply message is then transmitted to the offsite device. In various embodiments, the reply message or response as described here and above, may take on various forms, such as an XML message or a new context for the onsite device, which can be processed by a service on the offsite device.

According to the present invention there is provided an apparatus and method as set forth in the appended claims. Other features of the invention will be apparent from the dependent claims, and the description which follows.

### BRIEF DESCRIPTION OF THE DRAWINGS

The invention and the advantages thereof may best be understood by reference to the following description taken in conjunction with the accompanying drawings in which:
FIGS. 1A to 1C are illustrations showing various scenarios in which the present invention can be used;
FIG. 2 is a block diagram showing components of an offsite device and an onsite device in accordance with one embodiment;
FIG. 3 is a block diagram showing an alternative way of displaying micro-app recommendations and presentations to the TV viewer in accordance with one embodiment;
FIG. 4 shows illustrations of screen shots of sample previews of micro-recommendations in accordance with one embodiment;
FIG. 5 is a flow diagram of a process of offsite and onsite users collaborating to make a decision based on the users' contexts in accordance with one embodiment of the present invention;
FIG. 6 is a block diagram showing how an offsite context and an onsite context may be processed to derive a combined context in accordance with one embodiment; and
FIGS. 7A and 7B are diagrams of a computing device suitable for implementing embodiments of the present invention.

In the drawings, like reference numerals are sometimes used to designate like structural elements. It should also be appreciated that the depictions in the figures are diagrammatic and not to scale.

### DETAILED DESCRIPTION OF THE INVENTION

Methods and systems for enabling users to engage in collaborative decision-making using recommendations from a user at a stationary location to an offsite user who may or may not be mobile are described in the various figures. In the invention home users, referred to as onsite users, for example, can make decisions for offsite users based on the offsite user's context and the onsite user's context, described below. An offsite user can send context information to an onsite user for consideration. An onsite or home device, such as a TV, set-top box, desktop computer, or BDP, analyzes the offsite context together with the current onsite context and provides relevant, personalized recommendations which the onsite user can share with the offsite user. As described below, the recommendations may be described in one embodiment as "micro-recommendations" which are created by micro-apps executing on the home device. An example of a micro-recommendation from an onsite user to an offsite user may be "Pick up dinner from X restaurant (recommended by Yelp) on the way home, ETA from current location to home is 15 minutes, traffic jam on Rt. 9, take Main St. (recommended by Google Traffic)." This is a simple example; further details on contexts and other examples are provided below. However, before describing various embodiments of the present invention, it is helpful to understand different types of environments or settings in which the present invention can be used and what is meant by onsite and offsite users.

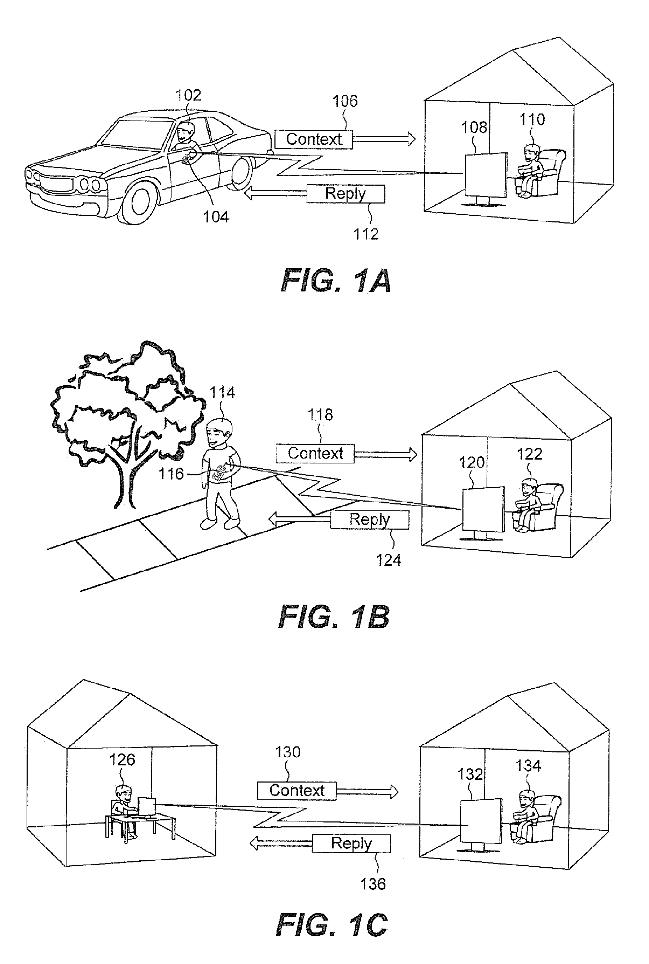

For purposes of illustrating the present invention, one embodiment, referred to as the described embodiment, assumes that the onsite location is a user's home and that the onsite device is a TV which can execute full apps and micro-apps. The offsite location may take various forms. FIGS. 1A to 1C are illustrations showing various scenarios in which the present invention can be used. In FIG. 1A, an offsite user 102 in a car with a mobile device, such as a smartphone (aka "app" phone), sends a context 106 to an onsite device 108, in this case a TV, viewed by an onsite user 110. Device 108 sends a reply message 112 to device 104. In one embodiment, reply 112 contains a micro-recommendation for user 102.

FIG. 1 B shows an offsite user 114 walking and holding a device 116, such as a tablet device, and sends his context 118 to an onsite device 120 (also a TV) watched by onsite user 122 who, after performing some operations and making a decision, sends a reply 124 to offsite user 114. Finally, in FIG. 1C, an offsite user 126 is at a home using a desktop or laptop computer 128. He sends a context message 130 to onsite device 132 being viewed by an onsite user 134. A reply 136 is sent back to offsite user 126. This user is considered offsite even though his device 128 is not mobile. The offsite device 128 may also be a TV. In another embodiment, the offsite user and device may be in the same house or building as the onsite user and device (e.g., the offsite device may be another TV in the same house).

As notes, the TV may be seen as the primary onsite device, although other types of devices, such as desktop or laptop computers can also be used. One characteristic of the TV is that it is generally static; it is at one location and generally does not have GPS capability, even though it may provide static location information (e.g., asking the user to input the zip code of the area). It is worth noting that although TVs are generally static, there are location detection mechanisms and schemes that can be used by a TV. For example, a TV can perform reverse IP lookup. In other examples, the TV can use user profile information which usually includes a zipcode or the TV can communicate with a phone or other GPS-enabled device previously paired to the TV via the local home network and using the phone's location as the TV location. Thus, with respect to one class or category of services that depend on location, namely location-based services (LBS), the TV is unable to provide any useful LBS or location data. One aspect of the present invention is that LBS data from a mobile device is sent to the TV so that the TV can use the LBS data to collect micro-recommendations and enable the TV viewer to make a decision or collaborate for the offsite user (this may also be described as the offsite user collaborating with the onsite user; they are both equivalent). Thus, offsite users provide context and location data to the TV user.

The user watching TV has a particular context. This context can include various types of data such as preferences with respect to a variety of things (of both the TV viewer and the offsite user), settings (again, of both users), content (currently being watched or which the viewer has watched in the recent past, etc.), apps, online content (videos, music, games, etc.), bookmarks, favorite sites, and various other types of data. These may include environment variables (light, 3D model of the room the TV is located in if a camera is mounted on the TV, audio information if a microphone is mounted on TV, presence detection, temperature, information about other devices currently connected to TV, such a home appliances, and the like. Examples of preferences may range from music to TV programs to preferred driving routes. All these types of data, and others not specifically listed here, may comprise a context for a user. As shown, the offsite user also has a context which has somewhat different data. Most notably, it will likely have real-time location data which changes as the offsite user moves, as part of the context. Although it is possible that the onsite user (e.g., the TV viewer) context may also have location data that does not change (e.g., GPS coordinates or home address). Contexts are described in greater detail below.

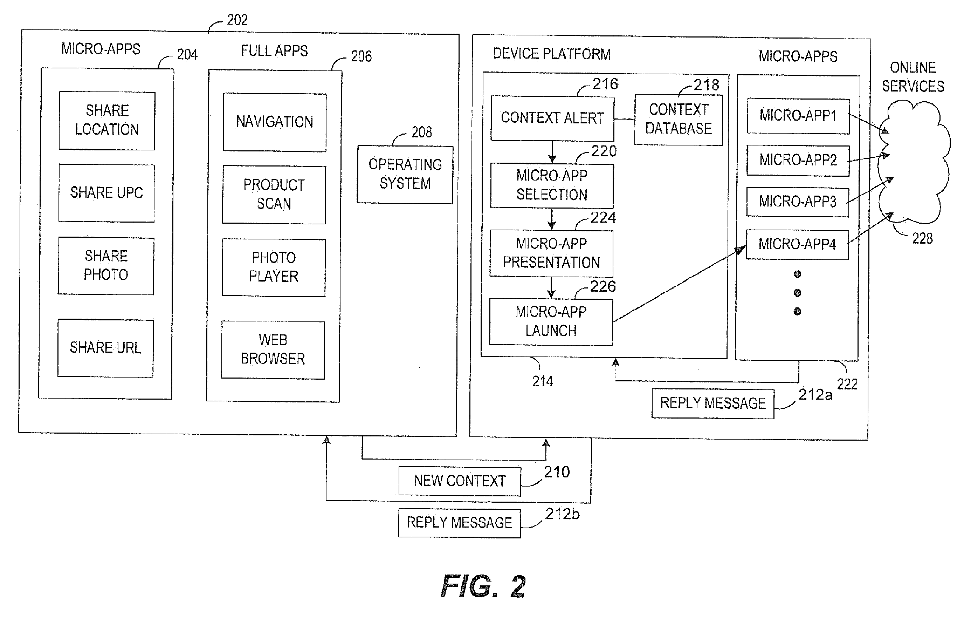

FIG. 2 is a block diagram showing components of an offsite device and an onsite device in accordance with one embodiment. An offsite device 202 has at least three components or modules relevant to the present invention. It has micro-apps 204, full apps 206, and operating system software 208. Examples of micro-apps 204 include "share location," "share UPC," "share photo," "share URL," and so on. These micro-apps and others may be from a TV platform, such as the TV+ Framework from Samsung Electronics Co., Ltd, of South Korea, or from a mobile or hand-held device platform. Micro-apps 204 may also be launched and executed from a full app. Micro-apps 204 and micro-apps from full apps 206 are structured to send specific platform (e.g., TV+) compatible messages (such as context data 210 described below) to a parser component, described below. Examples of full apps 206 include navigation, product scan, photo player, web browser, and so on. When selecting a device to share location data with, a location context sharing device may find a list of platform-compatible devices (e.g., TV+ devices) and the device can select any associated remote device to connect to. Operating system 208 will naturally depend on the type of device and is essentially needed for basic operations, some that are specific to this invention, such as creating and transmitting context data 210 and receiving and processing reply message 212. Other software (not shown) that may not be part of operating system 208 may be used for creating context data 210 and processing reply 212. In another embodiment, the combined context 210 instead of reply message 212 (or both context 210 and message 212) may be transmitted directly to offsite device 202 and the offsite user can make arrive at a decision. As noted, offsite device 202 may be a smart phone, a tablet device, a mobile gaming device, a TV, or computer. The number of micro-apps 204 and full apps 206 will likely vary depending on the type of device. Some devices may only have micro-apps 204 or full apps 206. It is generally desirable to keep the software needed for enabling the present invention on offsite device 202 to a minimum. In one embodiment, the only software residing on offsite device 202 that is specifically needed for collaborative decision-making of the present invention may be software for creating context 210 and processing and displaying reply message 212.

An onsite device 214 contains various components or modules needed for enabling the present invention. As mentioned above, the data gathering, decision-making, and micro-recommendation aspects are implemented on device 214 which, in many cases, will be a TV. The process starts with device 214 receiving context 210. In one embodiment, only onsite devices that have opted-in will receive context data from offsite devices. That is, only onsite devices that want to participate in the collaborative decision-making and micro-recommendations of the present invention will accept or even be aware of context data-type messages from offsite devices. In another embodiment, context data 210 can be broadcasted from device 202 to a list of onsite devices (e.g., a list of friends), instead of having data 210 sent to only one device as illustrated in FIG. 2. The transmission of context data 210 may be done over the Internet, over a cellular network, or any other suitable data transmission means known in the art. Such means will often depend on the type or capabilities of the offsite device.

Onsite device 214 has a context alert module 216 which is responsible for accepting context data 210. Module 216 is in communication with memory 218 for storing and merging (i.e., mashup) with existing context data from onsite devices and users. Memory 218 stores context data for the onsite viewer/user and may store previous or historical context data received by device 214. As described below, context 210 may be parsed, analyzed and combined or mashed with other context data stored in memory 218. Context alert module 216 is in communication with micro-app selection module 220. This module selects relevant micro-apps from micro-apps 222 based on context data from context alert module 216. This context data may not be the same as context data 210. As noted, it may be context 210 combined or mashed-up with onsite context data.

A micro-app presentation module 224 executes code for displaying on the TV screen the micro-apps which were selected by module 220. The TV viewer can now see which micro-apps are relevant to the combined context and can select which ones she wants to use. A micro-app launch module 226 causes the execution of apps selected by the user and has access to micro-apps 222. These micro-apps have access to the Internet (i.e., Web services) and execute in their normal manner. In the present invention, the TV viewer, for example, will presumably select micro-apps that are relevant to the combined contexts of the offsite user/device and the TV viewer's own onsite context. This and other viewer operations may be done using a remote control. In another embodiment, only the offsite user context may be taken into consideration when selecting micro-apps. The selected micro-apps send reply message 212 to the onsite device platform or framework which transmits it unaltered directly to offsite device 202. In another embodiment, reply message 212 may be pre-defined (by collaborative decision-making software or by the TV viewer) and pre-populated based on context data 210 and on the recommendations from the micro-apps (essentially the micro-apps' "decisions"). The TV viewer only needs to select one or more of the best or most appropriate recommendations using a remote control or keyboard. In this embodiment, the reply message from micro-apps 222 may be referred to as message 212a and the reply message to offsite device 202 may be referred to as 212b. In this embodiment, reply message 212b (not shown), containing only the recommendations or micro-app decisions that were selected by the TV viewer and that are pre-defined and pre-populated are transmitted to offsite device 202. A software component in platform 214 is responsible for receiving the reply message from micro-apps 222 and transmitting the message to offsite device 202 (and possibly multiple offsite devices).

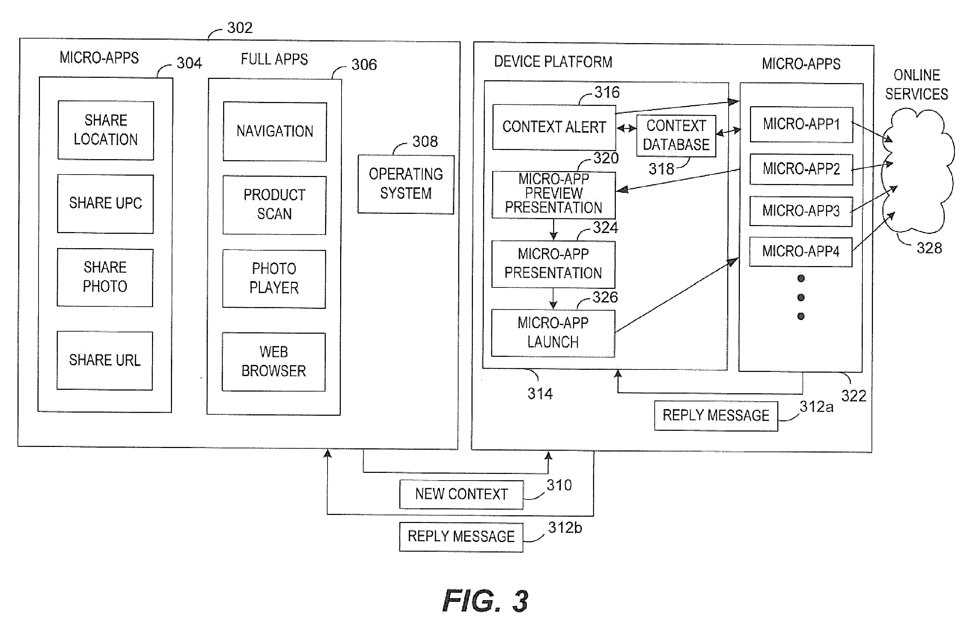

FIG. 3 is a block diagram similar to FIG. 2 showing an alternative way of displaying micro-app recommendations and presentations to the TV viewer in accordance with one embodiment. Many of the components in FIG. 3 have been described above in FIG. 2. Shown is an offsite device 302 having a micro-apps repository 304, a full apps repository 306, and an operating system 308. Context data 310 is sent to an onsite device 314 and a reply message 312 is sent back to device 302.

A context alert module 316 is in communication with a micro-apps repository 318. Module 316 sends context data 310 to micro-apps 318. In one embodiment, context data 310 is unmodified (i.e., it is the same context data 310 received from offsite device 302). In other embodiments, it may be modified in some manner by context alert module 316. Micro-apps repository 318 is in communication with a context database 320 where the micro-apps can query database 320 for the context of onsite device 314 and its viewer/user. Micro-apps 318 may then use the onsite device context and context data 310 to determine which micro-apps would be appropriate or relevant. Context alert module 316 may also be in communication with context database 320. For example, in one embodiment, context 310 that was received by onsite device 314 may be stored in database 320.

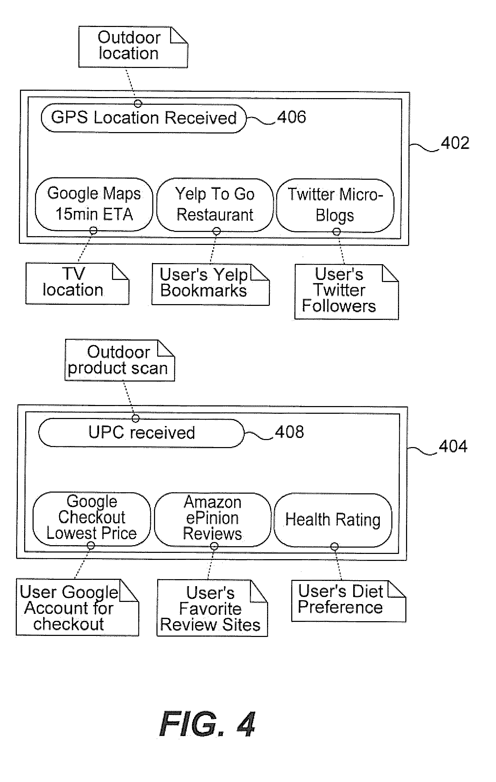

Upon receiving context data 310, certain micro-apps within micro-apps repository 318 execute and obtain preview recommendations from online services available from, for example, partners' servers, various search engines, and other online and cloud-based services. Essentially, the micro-apps that are relevant to context data 310 execute in a normal manner. Previews of recommendations or other data from those micro-apps (i.e., the certain ones that executed) are sent to a micro-app preview presentation module 322. Generally, the onsite device 314 is able to intelligently present a series of relevant micro-apps for the viewer to choose from and execute. Module 322 causes the display of these previews to the TV viewer. Examples of these previews are shown in FIG. 4. In one embodiment, micro-app presentation module 324 causes the display of the selected previews from the previous presentation. However, various other embodiments are equally possible. In another embodiment, micro-apps 322 may be a collection of all available (downloaded) micro-apps and micro-app presentation module 324 may cause the display of a subset of micro-apps 322 that are relevant to the current context. In another embodiment, if any micro-apps in micro-app 322 "self determines" that they have micro-recommendations relevant to the user, those micro-apps may send their preview data to module 320 for display to the TV user. In this embodiment, micro-app presentation module 324 may not be needed. The viewer sees micro-recommendations displayed by module 320 and may then select a micro-app to launch, performed by module 326, to see a full list of micro-recommendations. As noted, in this embodiment, micro-app presentation module is not needed and module operation may go from micro-app preview presentation module 320 directly to module 326. As noted above, in another embodiment, module 324 may be used as shown in FIG. 3.

Once the user selects a micro-app, the selected app launches at micro-app launch module 326. Control then goes back to a sub-set of the apps (or all of the apps, if all are selected) for which previews were presented by module 322. Thus, the primary difference between the first and second embodiments is that the onsite user is able to see ahead of time what decisions or micro-recommendations are being made by the micro-apps based on the new context received by the onsite device. The onsite user may then select a micro-app based on the previews.

FIG. 4 shows illustrations of screen shots of sample previews of micro-recommendations in accordance with one embodiment. Screen shot 402 is one example that may be displayed to an onsite user that shows at least three previews. As described above, a context from an offsite device is sent to the micro-app repository. In one embodiment, all the micro-apps are able to see the context which may contain, for example, a GPS location indicating an outdoor location of the offsite device. In another embodiment, there may be minimal processing or parsing of the context in order to make a quick determination of which micro-apps would be minimally relevant to data in the context.

The micro-apps may then query the existing context database to get more information on the overall or combined context. For ease of illustration, box 402 is a simplified rendering of a screen shot showing previews and where the context data is basically the GPS location shown as data item 406. Below it are three previews of micro-recommendations: Google Maps 15 minutes ETA (box 410), Yelp To Go Restaurant (box 412), and Twitter (other micro-blogs) (box 414). The Google Maps micro-recommendation indicates the distance of the offsite device/user from the onsite device location according to Google Maps. The Yelp recommendation reflects the offsite user's or onsite user's Yelp Bookmarks. The Twitter entries are for the offsite user's or onsite user's Twitter followers. Of course, many other examples of micro-apps and micro-recommendations can be used based on data in the offsite user's context (in this example, only the user's GPS location is shown as received data. Multiple previews may be displayed at the same time (such as three in the examples here) or one preview may be shown while at a time and the system may switch or rotate through multiple previews, where each one is displayed on the screen for a set time.

In another example, a rendering of a screen shot is shown in box 404. In this simplified rendering, the context data received is a UPC shown as data item 408 created by the offsite user doing a product scan. Shown below data item 408 are three previews of micro-recommendations that the onsite user can use to make a decision for the offsite user. One is a Google Checkout Lowest Price (box 416) obtained from one of the user's Google Account for product checkout services. Another is Amazon ePinion Reviews (or other product reviews) (box 418) that may be obtained from one of the offsite or onsite user's preferred or favorite review sites. In the final example, the product scanned may be health related and one of the micro-recommendations is a health rating (box 420) obtained by examining the offsite or onsite user's diet and health preferences. In most cases, the micro-recommendations may be derived from micro-apps using the offsite and onsite user's contexts. These contexts, as noted, may contain preference and settings data for the users, such as health preferences, favorite review sites, bookmarks, Facebook or other social networking preferences, and so on. All this information may be used in the second embodiment in creating the micro-recommendation previews or, in the first embodiment, the micro-app selection and presentation.

The onsite user may then select which micro-apps to use by selecting one or more of the previews using, for example, a TV remote control. In another embodiment, the onsite user selects one or more previews and the micro-apps that created those previews are presented in another display to the onsite user giving her another opportunity to make selections of which micro-apps to use or to see the previews and the underlying micro-apps in a different format that may make it easier for the onsite user to make a decision.

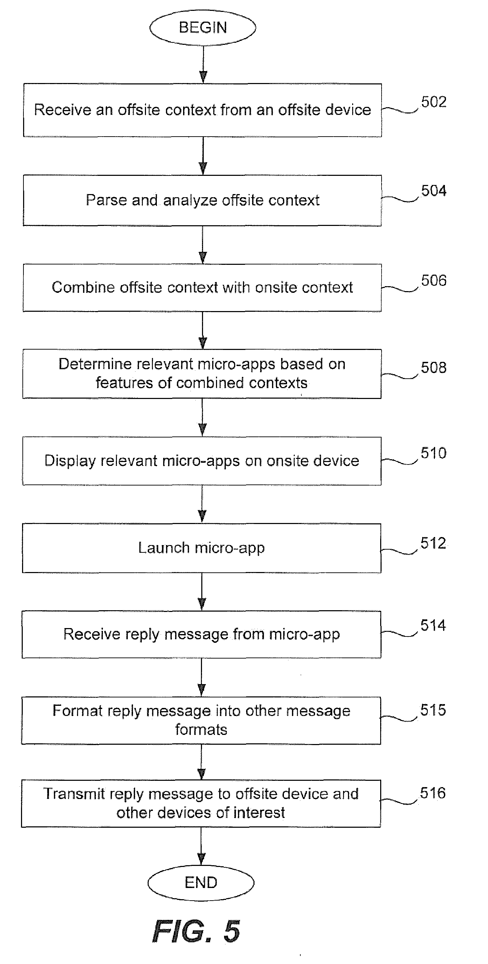

FIG. 5 is a flow diagram of a process of offsite and onsite users collaborating to make a decision based on the users' contexts in accordance with one embodiment of the present invention. Some of the steps, concepts, embodiments, and examples provided here have been described above but are described again for clarity. The flow diagram describes one embodiment; there may be other embodiments in which the flow of the steps is different from what is described here. For example, in another embodiment, the context sharing starts with an onsite user, who sends a context to the offsite user, and ends with the offsite user who uses a combined context to arrive at a decision, instead of the flow in FIG. 5 where the reverse scenario is described.

An offsite user utilizing an offsite device to send a context to an onsite device/user. As noted, the offsite device may be another TV at another house (or in another room in the same house), a computer, a smartphone, or other type of hand-held or mobile device. The offsite user wants to collaborate or get the help of another user, namely, the onsite or home user, who is likely to have more computing resources, software, micro-apps, network accessibility and data available to her by virtue of using a TV or computer.

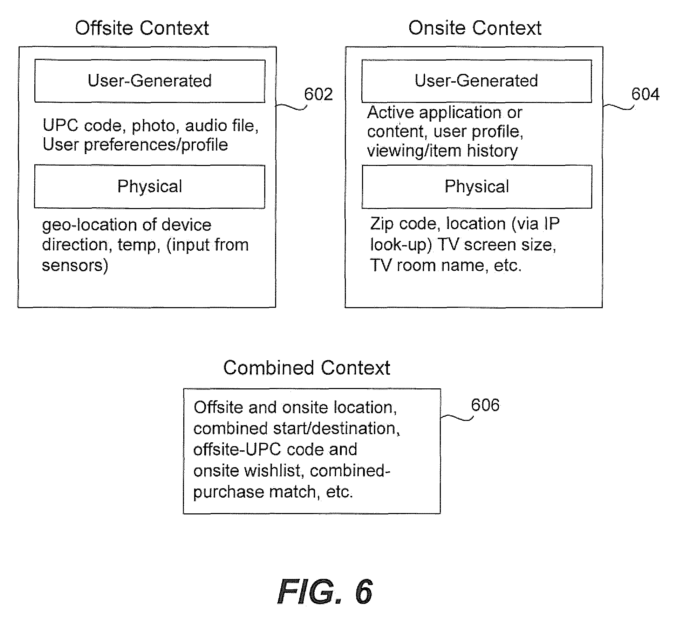

At step 502 the onsite device receives an offsite context from an offsite device. This data may be sent over the Internet or over a cellular network. A context alert component in the onsite device is able to parse and analyze the offsite context at step 504. In one embodiment, the offsite context is parsed and analyzed before being combined with an onsite context. In another embodiment, the parsing and analyzing is done on the combination of the offsite and onsite contexts. This combination or mash-up of the two contexts is performed at step 506. It is worth noting that there may be more than one offsite context. That is, there may be multiple offsite users, each having a device and each sending a context to the onsite device. An example of a mash-up of two contexts is shown in FIG. 6.

At step 508 the system examines the features of the combined or mashed-up contexts and based on this analysis determines which micro-apps or services would be most relevant to the combined context. Generally, this context and micro-app pairing may be done in using one or more algorithms. One way is to use keywords and tags. For example, Google Map micro-app subscribes to the tag "location", thus an offsite context may include tag "location" (along with other tags, such as "product" for UPC scans, "media" for photos, and so on. Relevant micro-apps are determined by matching keywords from features of the combined context with metadata or tags associated with the micro-apps currently residing on the onsite device. For example, a keyword in the combined context may be "tennis racket" which may be interpreted as a product and therefore relevant to a price-comparison service. Or it may be interpreted as the offsite user wanting to play tennis, in which case a mapping or location-based service would be relevant. An ontology or concept tree may also be used to "determine/derive" the conclusion: Tennis racket to sports gear to products to shopping services. Another algorithm may use context type and predefined types (e.g., movie, TV show, GPS, map, compass, etc.) with predefined relationships with services (location-based, movie details, map services, and so on). User patterns, such a "most used" or "recently used" may also be used for context and micro-app pairing. For example, if a user received a GPS context, and most people selected Google Map micro-app, then the system will pair the Google Map micro-app automatically.

The onsite device may have 40 micro-apps on it and only five or six of those may be relevant to the combined context. Those are determined at step 508. This may be described as intelligent micro-app selection. In one embodiment, there may be pre-selected micro-apps where each knows which contexts are relevant or important. For example, an IMDB app (or other app on movie and TV industry data) is aware that a context that has movie information or questions of TV shows in it is more important to it than a context that has mostly location or GPS data and questions about restaurants. Such pre-selected or pre-registered services may have tags for identifying which types of contexts are relevant or important to it.

At step 510 relevant micro-apps (if any) are displayed to the user of the onsite device, such as on a TV screen. In another embodiment, if there are only a few micro-apps on the device, all the apps may be displayed and a "relevance" analysis (step 508) may not be needed. The micro-apps are displayed and the user can select which ones to execute. At step 512 the user selects a micro-app, for example, Google Maps or Yelp (maybe using the offsite user's bookmarks) and launches the selected service at step 512 (additional micro-apps may be selected in subsequent rounds). This typically involves accessing the Internet in order to utilize Web-based services, search engines, and so on. If the onsite device is a TV then the viewer can use the remote control to make the selections. Conventional or current methods or processes utilized by the onsite device in its normal course of operation can be used to launch a micro-app once the selection has been made.

Once the micro-apps or services have been launched, the onsite device receives, in a normal or conventional manner, a response from the micro-app at step 514. The form of this response may be varied depending on the service. Some examples are shown in FIG. 4 as previews of micro-recommendations. The reply message or micro-recommendation may, for example, have an XML structure (and may be viewable by the user), be in the form of human-readable text, or could be a new context for the onsite device. In one scenario, the offsite device is at another home and may be a TV. In this case, the two devices can send each other new or updated contexts, that is, the reply messages take the form of a new context which can be processed or read by a micro-app on the offsite device. If the reply message is intended to be interpreted by the CPU or processor of the offsite or onsite device, there would likely be a need to have a pre-defined protocol.

In one embodiment, at step 515 the reply message is formatted into multiple message formats on the onsite device, as described below. The reply message from the micro-app is then transmitted to the offsite device and to other devices of interest, if any, at step 516. In another embodiment, the combined context may be transmitted to the offsite device rather than the reply message (i.e., micro-recommendation) and the offsite user can use the combined context to make a decision on which services to use and how to proceed. In one embodiment, no substantive or significant processing is done on the reply; the onsite device acts as a conduit for the reply message to make its way to the offsite device where it is presented to the offsite user as a micro-recommendation which the offsite user may follow if desired. However, as noted, at step 515, there may be some processing of the reply message on the onsite device before it is transmitted, for example, it may be put in the form of a new context, such as a specific platform (e.g., TV+) message format for offsite devices on the same platform or put into XML format for industry standard formats to process as messages (e.g., Facebook posts, Twitter tweets, and the like). In another example, the offsite user may scan a DVD item at a store using micro-app A. She may then use micro-app B to see the pricing of the same item at nearby stores as well as checking availability and pricing of the item at online stores. She may then share this context with the onsite user who uses his own context (i.e., the video-on-demand (VOD) full and micro-apps available on TV) to do further price comparisons based on the onsite context. This result may then be shared with the offsite user. At this stage this round is complete. Potentially the system may have multiple rounds of this type (or other types) of interaction. The offsite user has collaborated with the onsite user by sharing the offsite user's context with the onsite device to arrive at a decision or micro-recommendation.

This recommendation is the result of leveraging resources and data that would not normally be accessible, in a practical manner, to the offsite user. The offsite user may and likely will have access to its own micro-apps and full apps, as shown in FIGS. 2 and 3, which are likely to be different from the micro-apps available to the onsite user. However, the onsite user may have more sophisticated apps and access to more information on both users (such as preferences and settings). Using the processes described above, the offsite user is getting access to a richer selection of apps.

In one embodiment, processes take place in a peer-to-peer type network, where the offsite and onsite devices are considered peers. However, when the onsite device is a TV, it may be seen as a special scenario. A TV is not a peer device in the same sense that an HHP, other mobile device, or even a computer, is a peer. The TV is a community device in that it has the contexts of both the onsite and offsite users, and may also have the history and preference data of both users which can be used together with the combined contexts in the collaborative decision-making process.

FIG. 6 is a block diagram showing how an offsite context and an onsite context may be processed to derive a combined context in accordance with one embodiment. An offsite context 602 may have certain user-generated features. These may include a UPC code, a picture, and an audio file. Some physical features may include location of the device, direction, and outside temperature, among other input from sensors on or connected to the device. An onsite context 604 may include user-generated features such as the active application or content (e.g., on the TV), user preferences and profile, and viewing/item history (products, posts, movies, etc.). Physical features in onsite context 604 may include zip code, location via IP look-up, TV screen size, TV room name, camera features, among others. Combining these two contexts result in a combined context 606 which, for example, may be offsite location plus onsite location, which may include combined start/destination; offsite UPCcode plus onsite "wishlist"; combined- purchasematch; offsite-tweet plus onsite post history; and combined post match. The DVD item scenario described above is one example of an offsite context (UPCcode scanning, etc.) being combined with an onsite context (VOD full/micro-apps) to arrive at a combined context. In another example the onsite user running a cooking app on TV tells what ingredients are needed.

As noted above, the present invention is likely most useful when the offsite user has a need to take advantage of the resources and data available to the onsite user or is in a position where he is unable to make a decision without collaborating with the onsite user. This may be particularly true with media-related use cases. In one example, an offsite user scans a DVD product and shares the UPC with an onsite (home) user to see if 1) if the DVD is provided by the offsite user's (and onsite user's, if they live in the same household) DVR provider; 2) if the DVD is less expensive through a video-on-demand app; or 3) if the content on the DVD has already been purchased by someone in the household. There may be cases where the offsite user can use the resources on the offsite device to make an adequate decision but, nevertheless, may want to share his context with an onsite user to collaborate on a decision. The present invention can also be applied in multi-user scenarios. For example, a context from an offsite user contains GPS data and is received by an onsite user. The onsite user selects Google Maps and replies "See you in 15 mins." A second onsite user (who may be from the same household or from a different one from the first onsite user) selects Yelp and replies "Pick up dinner at ABC restaurant." In this case, the offsite user receives two decisions/replies.

In another example, after the TV receives a location context, a set of micro-apps are auto selected not only by the preference of the micro apps but also from the activity history of the user in micro-apps. A bookmark micro-app can also check whether the bookmarked items will be interested to the user at this time and location. An activity planning engine on the TV can generate an activity schedule from those auto selected micro-apps. The schedule can be ordered based on priority of interest, best route, and best time. A second user may use a TV or other device to perform the action.

A bookmark micro-app may be useful in the following way. User A has previously used some micro-apps on a TV at home, such as Google Maps, and he has bookmarked several places he is interested in. When the user is outdoors (offsite) using his mobile device and he is trying to reach user B who is at home (onsite) watching TV, the onsite context may be generated by micro-apps that are selected by user B and user A's bookmarked information. In another example involving the activity planning engine, based on the combined context, an onsite device would know the priority order for the offsite device (based on user A's past activities on the onsite device). A recommended activity list may then be transmitted to offsite user A. The recommended action list may be: first go to the grocery store, then buy movie tickets, then tend to another task or activity, and so on.

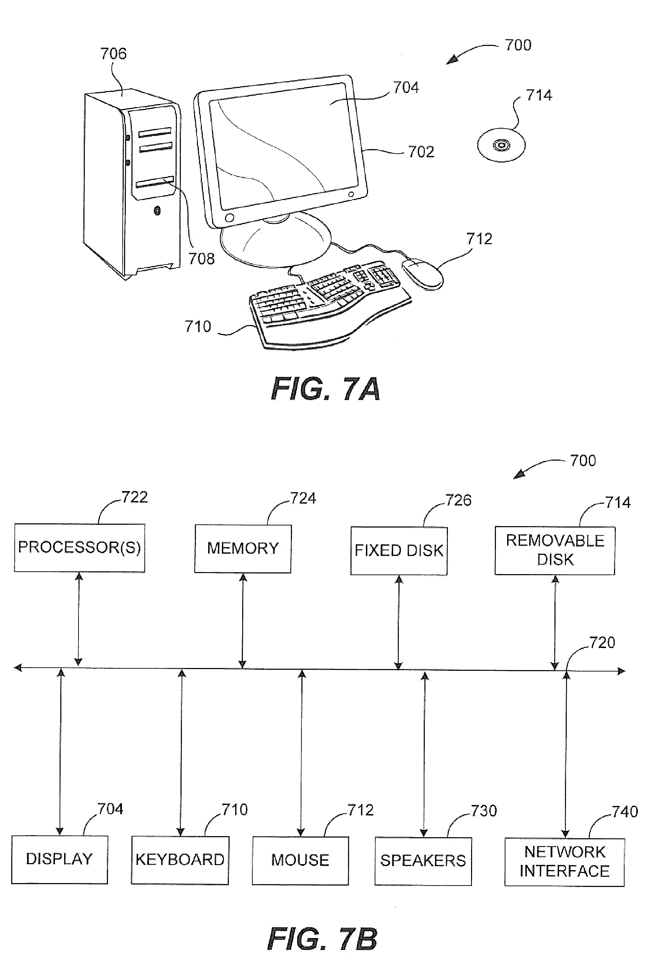

The offsite and onsite devices may be described generally as computing devices having some of the basic components of a computer. As noted numerous times above, the computing device may be, for example, a smartphone, a tablet computer, a mobile device, a TV, a PC or laptop computer, or a surface computer device. FIGS. 7A and 7B illustrate a generic computing system 700 suitable for implementing specific embodiments of the present invention. Some of the devices that can be used in the present invention may have other features or components that are not shown in FIGS. 7A and 7B and not all the components shown in these figures (e.g., the keyboard) are needed in the offsite or onsite devices for implementing the present invention. As such, FIG. 7A shows one possible physical implementation of a computing system. In one embodiment, system 700 includes a display or screen 704. This display may be in the same housing as system 700. It may also have a keyboard 710 that is shown on display 704 (i.e., a virtual keyboard) or may be a physical component that is part of the device housing. It may have various ports such as HDMI or USB ports (not shown). Computer-readable media that may be coupled to device 700 may include USB memory devices and various types of memory chips, sticks, and cards.

FIG. 7B is an example of a block diagram for computing system 700. Attached to system bus 720 is a variety of subsystems. Processor(s) 722 are coupled to storage devices including memory 724. Memory 724 may include random access memory (RAM) and read-only memory (ROM). As is well known in the art, ROM acts to transfer data and instructions uni-directionally to the CPU and RAM is used typically to transfer data and instructions in a bidirectional manner. Both of these types of memories may include any suitable of the computer-readable media described below. A fixed disk 726 is also coupled bi-directionally to processor 722; it provides additional data storage capacity and may also include any of the computer-readable media described below. Fixed disk 726 may be used to store programs, data and the like and is typically a secondary storage medium that is slower than primary storage. It will be appreciated that the information retained within fixed disk 726, may, in appropriate cases, be incorporated in standard fashion as virtual memory in memory 724.

Processor 722 is also coupled to a variety of input/output devices such as display 704 and network interface 740. In general, an input/output device may be any of: video displays, keyboards, microphones, touch-sensitive displays, tablets, styluses, voice or handwriting recognizers, biometrics readers, or other devices. Processor 722 optionally may be coupled to another computer or telecommunications network using network interface 740. With such a network interface, it is contemplated that the CPU might receive information from the network, or might output information to the network in the course of performing the above-described method steps. Furthermore, method embodiments of the present invention may execute solely upon processor 722 or may execute over a network such as the Internet in conjunction with a remote processor that shares a portion of the processing.

In addition, embodiments of the present invention further relate to computer storage products with a computer-readable medium that have computer code thereon for performing various computer-implemented operations. The media and computer code may be those specially designed and constructed for the purposes of the present invention, or they may be of the kind well known and available to those having skill in the computer software arts. Examples of computer-readable media include, but are not limited to: magnetic media such as hard disks, floppy disks, and magnetic tape; optical media such as CD-ROMs and holographic devices; magneto-optical media such as floptical disks; and hardware devices that are specially configured to store and execute program code, such as application-specific integrated circuits (ASICs), programmable logic devices (PLDs) and ROM and RAM devices. Examples of computer code include machine code, such as produced by a compiler, and files containing higher-level code that are executed by a computer using an interpreter.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of collaborative decision-making between an offsite user and an onsite user using contexts, the method comprising:
combining an offsite context with an onsite context to derive a combined context;
determining one or more services based on the combined context;
presenting the one or more services, wherein a service is selected; and
receiving a response from the selected service.

2. A method as recited in claim 1 further comprising:
receiving an offsite context at an onsite device.

3. A method as recited in claim 2 further comprising:
parsing and analyzing the offsite context to extract information which can be used by the one or more services.

4. A method as recited in claim 2 further comprising:
parsing and analyzing the onsite context to extract information which can be used by the one or more services.

5. A method as recited in claim 2 further comprising:
parsing and analyzing the combined context to extract information which can be used by the one or more services.

6. A method as recited in claim 2 further comprising:
retrieving the onsite context from an onsite context database.

7. A method as recited in claim 1 wherein the response is pre-defined and pre-populated based on the combined context and decisions made by the one or more services.

8. A method as recited in claim 1 wherein the offsite device and the onsite device are devices in a peer-to-peer network.

9. A method as recited in claim 1 wherein the offsite context is broadcasted to a plurality of onsite devices.

10. A method as recited in claim 1 further comprising:
receiving an onsite context at an offsite device.

11. A method as recited in claim 10 further comprising transmitting the combined context to the onsite device.

12. An onsite device for collaborating with an offsite device by providing context-dependent information, the device comprising:
a processor;
a network interface;
a context alert module;
a micro-app selection module;
a micro-app presentation module; and
a memory storing context data.

13. A device as recited in claim 12 further comprising:
a micro-app launch module for executing a micro-app.

14. A device as recited in claim 12 wherein the context data includes onsite device context data.

15. A device as recited in claim 12 wherein the context alert module parses and analyzes a received context from the offsite device.
